(19) Europäisches Patentamt / European Patent Office / Office européen des brevets

(11) **EP 1 369 984 B1**

## (12) EUROPEAN PATENT SPECIFICATION

(45) Date of publication and mention
of the grant of the patent:
**03.04.2019 Bulletin 2019/14**

(51) Int Cl.:
**H02M 7/5387** *(2007.01)* **H02M 7/5395** *(2006.01)*

(21) Application number: **03076721.4**

(22) Date of filing: **03.06.2003**

(54) **CONTROL EQUIPMENT FOR A TIME DISCRETE PULSE WIDTH MODULATED VOLTAGE SOURCE CONVERTER, AND A METHOD FOR CONTROLLING THE SAME**

STEUERVORRICHTUNG FÜR EINEN ZEITDISKRETEN PULSBREITENMODULIERTEN U-UMRICHTER UND ZUGEHÖRIGES VERFAHREN

EQUIPEMENT DE COMMANDE D'UN CONVERTISSEUR DE SOURCE DE TENSION À LARGEUR D'IMPULSION EN TEMPS DISCRETE ET PROCÉDÉ ASSOCIÉ

(84) Designated Contracting States:
**AT BE BG CH CY CZ DE DK EE ES FI FR GB GR HU IE IT LI LU MC NL PT RO SE SI SK TR**

(30) Priority: **05.06.2002 SE 0201693**

(43) Date of publication of application:
**10.12.2003 Bulletin 2003/50**

(73) Proprietor: **ABB Schweiz AG**
**5400 Baden (CH)**

(72) Inventors:
• **Häfner, Ying Jiang**
**771 43 Ludvika (SE)**

• **Häfner, Jürgen**
**771 43 Ludvika (SE)**
• **Petersson, Anders**
**771 43 Ludvika (SE)**
• **Monteiro, Augusto José**
**771 43 Ludvika (SE)**

(74) Representative: **Ahrengart, Kenneth et al**
**ABB AB**
**Intellectual Property**
**Forskargränd 7**
**721 78 Västerås (SE)**

(56) References cited:
**EP-A1- 1 174 993 US-A- 5 648 894**

**Description**

TECHNICAL FIELD

The invention relates to a time-discrete pulse-width modulation control equipment for a 3-level or a 2-level voltage source converter, and to a method for controlling such a converter.

BACKGROUND ART

Voltage source converters (VSC) are used for example in high voltage direct current (HVDC) systems, and also as Static Var Compensators (SVC). In the HVDC application, the voltage source converter is coupled between a direct current link and an alternating current network, and in the second application between a direct voltage source and an alternating current network. In both these applications, the voltage source converter must be able to generate an alternating current (AC) voltage of the same frequency as that of the alternating current network. The reactive and the active power flow through the converter is controlled by modulating the amplitude and the phase position, respectively, of the generated AC voltage in relation to the voltage of the alternating current network.

In particular the coming into being of voltage source converters equipped with series-connected transistors (IGBT) has made it possible to use this type of converters for comparatively high voltages, and pulse width modulation (PWM) for control of the generated AC voltage enables a very fast control of that voltage.

For a general description of controls systems for voltage source converters reference is made to Anders Lindberg: PWM and Control of Two and Three Level High Power Voltage Source Converters. Royal Institute of Technology, Department of Electric Power Engineering. Stockholm 1995, in particular pages 1, 21-56, 77-106, and appendix A. This document is in the following referred to as Anders Lindberg for short.

The block diagrams to be described in the following can be seen both as signal flow diagrams and block diagrams of control equipment for the converter. The functions to be performed by the blocks shown in the block diagrams may in applicable parts be implemented by means of analogue and/or digital technique in hard-wired circuits, but preferably as programs in a microprocessor. It shall be understood that although the in the figures shown blocks are mentioned as members, filters, devices etc. they are, in particular where their functions are implemented as software for a microprocessor, to be interpreted as means for accomplishing the desired function. Thus, as the case may be, the expression "signal" can also be interpreted as a value generated by a computer program and appearing only as such. Only functional descriptions of the blocks are given below as these functions can be implemented in manners known per se by persons skilled in the art.

In order not to weigh the description with for the person skilled in the art obvious distinctions, usually the same designations are used for quantities that appear in the high voltage system and for measured values and signals/values corresponding to these quantities that are supplied to and processed, respectively, in the control equipment and control system described below. Variables appearing in the control equipment to be described below, representative of voltages and currents, are shown in vector form as a short form to illustrate their multi-phase character and to facilitate the illustration of transformations between various reference planes used in the control equipment. Vector units are designated with a dash on top $(\overline{x})$.

Parts that are similar to each other and appear in more than one figure are given the same designation numbers in the various figures.

Connecting lines between sensed values and blocks as well as between blocks have occasionally been omitted in order not to unnecessary weigh the figures. However, it is to be understood that the respective variables appearing at the inputs of some blocks are supplied from the sensed values respectively from the blocks where they are generated.

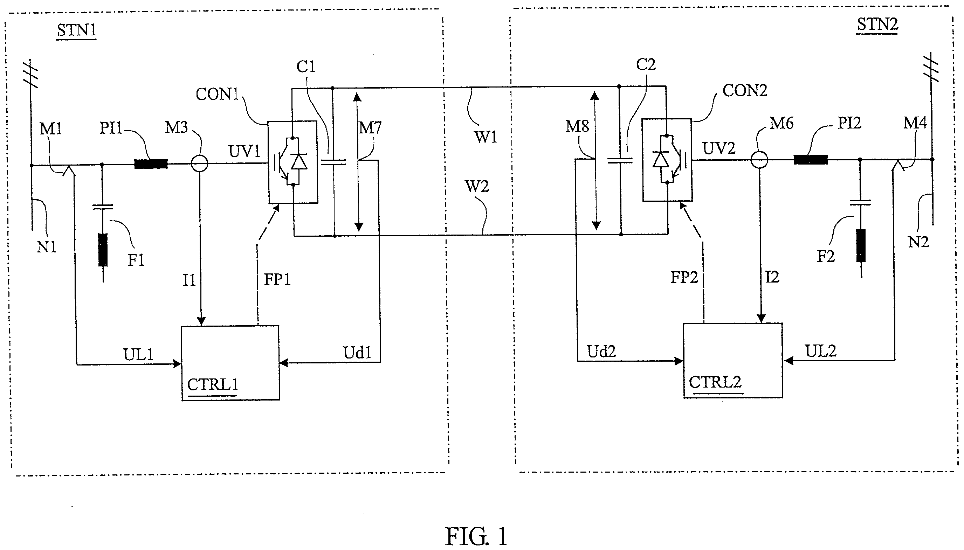

Figure 1 shows in the form of a schematic single line and block diagram a high voltage direct current transmission system as known in the prior art. A first and a second converter station STN1 and STN2 respectively, are coupled to each other via a direct current link having two pole conductors W1 and W2 respectively. Typically, the pole conductors are cables but they may also, at least to a part, be in the form of overhead lines. Each converter station has a capacitor equipment, C1 and C2, respectively, coupled between the pole conductors, and comprises a voltage source converter CON1 and CON2, respectively. Each converter comprises semiconductor valves in a per se known bridge connection, such as, par example, a 2-level or a 3-level converter bridge as described in Anders Lindberg on pages 8-16. The semiconductor valves comprise, in a way known per se, branches of gate turn on/turn off semiconductor elements, for example power transistors of so-called IGBT-type, and diodes in anti-parallel connection with these elements.

Each converter is via a phase inductor PI1 and PI2, respectively, coupled to a respective three-phase alternating current electric power network N1 and N2. Although not shown in the figure, it is well known in the art that the converters may be coupled to the three-phase network via transformers, in which case the phase inductors in some cases may be omitted. Filter equipment F1 and F2, respectively, are coupled in shunt connection at connection points between the phase inductors and the three-phase networks.

The AC-voltage of the alternating current network N1 at the connection point of the filter F1 is designated $UL1$ and is sensed with a sensing device M1. This voltage is in the following called the bus voltage of the alternating current network N1. The AC-voltage set up by the converter CON1 is designated $UV1$ and is in the following called the bridge voltage of the converter CON1. The alternating current at the converter CON1 is designated $I1$ and is sensed with a measuring device M3. Similarly the AC-voltage at the connection point of the filter F2 is designated $UL2$ and is sensed with a sensing device M4, and the alternating current at the converter CON2 is designated $I2$ and is sensed with a measuring device M6. The AC-voltage at the connection point of the filter F2 is in the following called the bus voltage of the alternating current network N2. The AC-voltage set up by the converter CON2 is designated $UV2$ and is in the following called the bridge voltage of the converter CON2.

The DC-voltage across the capacitor equipment C1 is designated $Ud1$ and the DC-voltage across the capacitor equipment C2 is designated $Ud2$. These voltages are sensed with only symbolically shown sensing devices M7 and M8, respectively.

The first converter station comprises control equipment CTRL1 and the second converter station control equipment CTRL2, usually of similar kind as the control equipment CTRL1, for generation of trains $FP1$ and $FP2$, respectively, of turn on/turn off orders to the semiconductor valves according to a predetermined pulse width modulation pattern.

The converter stations can operate in four different modes, one of dc-voltage control and active power control and one of ac-voltage control and reactive power control. Usually, one of the converter stations, for example the first one, operates under DC-voltage control for voltage control of the direct current link, whereas the second converter station operates under active power control and under AC-voltage or reactive power control. The operation modes are set either manually by an operator, or, under certain conditions, automatically by a not shown sequential control system.

A control system for a voltage source converter in an HVDC transmission system is described in the European patent application with publication number EP 1 174 993 A1. Document US 5, 648, 894 A discloses a time-discrete pulse-width modulation control equipment for a 2-level voltage source converter.

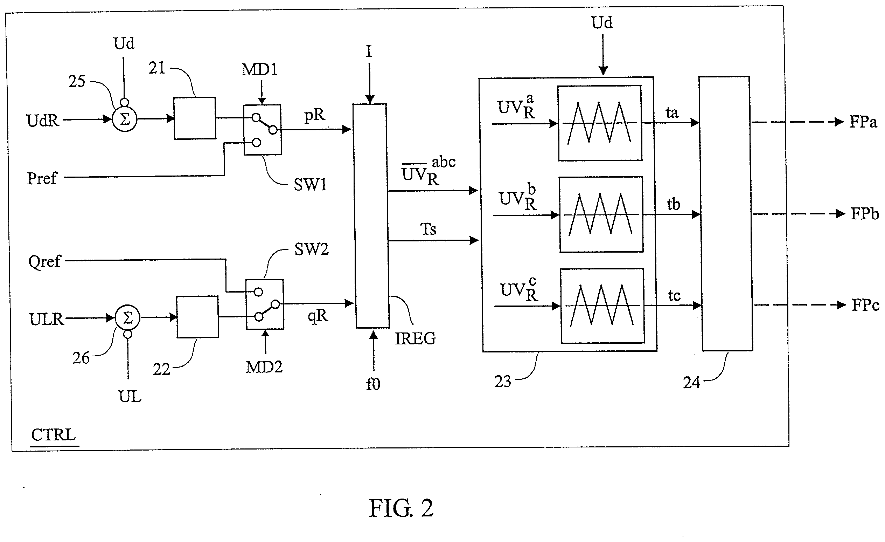

Figure 2 shows a known embodiment of control equipment, representative of both the control equipments CTRL1 and CTRL2, and where the indices 1 and 2 are omitted for sake of simplicity.

The control equipment comprises a DC-voltage controller 21, an AC-voltage controller 22, selector means SW1 and SW2, a converter current control system IREG, a pulse width modulation unit 23, and a switching logic unit 24.

An actual value of the sensed DC-voltage $Ud$ across the respective capacitor equipment and a voltage reference value $UdR$ thereof are supplied to a difference forming member 25, the output of which is supplied to the dc-voltage controller.

An actual value of the sensed respective bus voltage $UL$ and a voltage reference value $ULR$ thereof are supplied to a difference forming member 26, the output of which is supplied to the ac-voltage controller.

Selector means SW1 is supplied with the output signal of the DC-voltage controller and with a reference value $P_{ref}$ for active power flow through the converter. Selector means SW1 outputs in dependence on a mode signal MD1 a signal $pR$ being one of the output signals of the DC-voltage controller and the reference value $P_{ref}$.

Selector means SW2 is supplied with the output signal of the AC-voltage controller and with a reference value $Q_{ref}$ for reactive power flow through the converter. Selector means SW2 outputs in dependence on a mode signal MD2 a signal $qR$ being one of the output signals of the AC-voltage controller and the reference value $Q_{ref}$.

The AC-and DC-voltage controllers have for example a proportional/ integrating characteristics. The reference values $P_{ref}$ and $Q_{ref}$ may in a conventional way be formed as outputs from controllers (not shown) for active and reactive power flow, respectively.

The output signals $pR$ and $qR$ of the selector means are supplied to the converter current control systems IREG of the respective converter, to be further described below. The current control system provides an inner AC-current control feed-back loop, which, in dependence on a supplied current reference vector formed in dependence on the output signals $pR$ and $qR$ of the switching means and on a phase reference synchronising signal, generates a voltage reference template for each of the phases of the alternating current network, in the figure shown as a voltage reference vector $\overline{UV}_R^{abc}$. This voltage reference vector represents the voltage reference for the bridge voltage of the respective converter. With the phases of the three-phase alternating current network designated a, b and c, the upper index $abc$ of the vector refers to the three phase voltages set up by the converter, and the vector thus has the components $UV_R^a$, $UV_R^b$, and $UV_R^c$, these components being the respective voltage reference templates.

The converter current control system is also supplied with the actual value I of the alternating current at the converter and with the nominal value $f0$, usually 50 or 60 Hz, of the frequency of the alternating current electric power network.

The voltage reference vector is supplied to pulse width modulation unit 23 that determines the time instants $ta$, $tb$, and $tc$ for the commutation of the valves in the respective phase a, b and c of the converter, and switching logic unit 24 generates in dependence thereon a train *FPa, FPb,* and *FPc,* of turn on/turn off orders supplied to the semiconductor valves. For a general description of known pulse width modulation units, reference is made to Anders Lindberg, in particular pages 21-28, and 34-56.

Preferably, the converter current control system is implemented as software run on a microprocessor and executed as a sampled control system. The pulse width modulation unit is then also supplied with a value of the sample period time *Ts* from the current control system as will be described below.

For practical reasons, that is for facilitating the calculations to be described in more detail below, the converter current control system operates in a conventional way with the three phase units (voltages and currents of the alternating current network) transformed to and expressed in a rotating two-phase *dq* -reference plane, arrived at via a transformation to a stationary two-phase $\alpha\beta$-reference plane. The three phase units of the alternating current network will thereby be transformed to direct current quantities that can be processed with per se known control system techniques.

With the phases of the three-phase alternating current network designated a, b and c, the three-phase system is referred to as the *abc* -system. In the following text and in the figures, the reference plane is, where appropriate, indicated as an upper index (for example $\overline{x}^{dq}$).

The transformation of currents and voltages expressed in the *abc* - reference plane to the *dq*-reference plane is treated in detail in appendix A of Anders Lindberg, but a brief summary will be given here.

A set of three phase quantities of the three-phase *abc* - system, for example voltages or currents, generally designated $x_a$, $x_b$, $x_c$ respectively, are in the $\alpha\beta$ -reference plane represented by a space vector $\overline{x}^{\alpha\beta}$, which is arrived at by a transformation defined as

$$\overline{x}^{\alpha\beta} = x_\alpha + jx_\beta = \frac{2}{3}(x_a * e^{j0} + x_b * e^{j2\pi/3} + x_c * e^{-j2\pi/3}) \tag{1}$$

With $\omega$ designating the angular frequency of the three-phase alternating current network, and with $x_a = \widehat{x}\cos(\omega t - \varphi)$, $x_b = \widehat{x}\cos(\omega t - \varphi - 2\pi/3)$, and $x_c = \widehat{x}\cos(\omega t - \varphi - 4\pi/3)$, the space vector $\overline{x}^{a\beta}$ becomes

$$\overline{x}^{\alpha\beta} = \widehat{x}\, e^{j(\omega t - \varphi)} \tag{2}$$

which is a vector that has the length $\widehat{x}$ and rotates with the angular frequency $\omega$ in the stationary $\alpha\beta$ -reference plane.

A transformation of the space vector $\overline{x}^{\alpha\beta}$ to a vector $\overline{x}^{dq}$ in the *dq* -reference plane is formally expressed as

$$\overline{x}^{dq} = x_d + jx_q = \overline{x}^{\alpha\beta} * e^{-j\xi} \tag{3}$$

The direction of the *d* - axis is defined as the direction of a vector in the $\alpha\beta$ - reference plane being the transformation of a symmetrical three-phase quantity with the phase displacement $\varphi = 0$. With $\xi = \omega t$ the expressions (2) - (3) result in

$$\overline{x}^{dq} = \widehat{x}\, e^{j(\omega t - \varphi)} * e^{-j\omega t} = \widehat{x}\, e^{-j\varphi} \tag{4}$$

which expression represents a vector that in steady state is stationary in the rotating *dq* -reference plane, having the phase position $\varphi$ related to the direction of the *d* -axis. Thus, the components of the vector $\overline{x}^{dq}$ can be conceived of as direct current quantities.

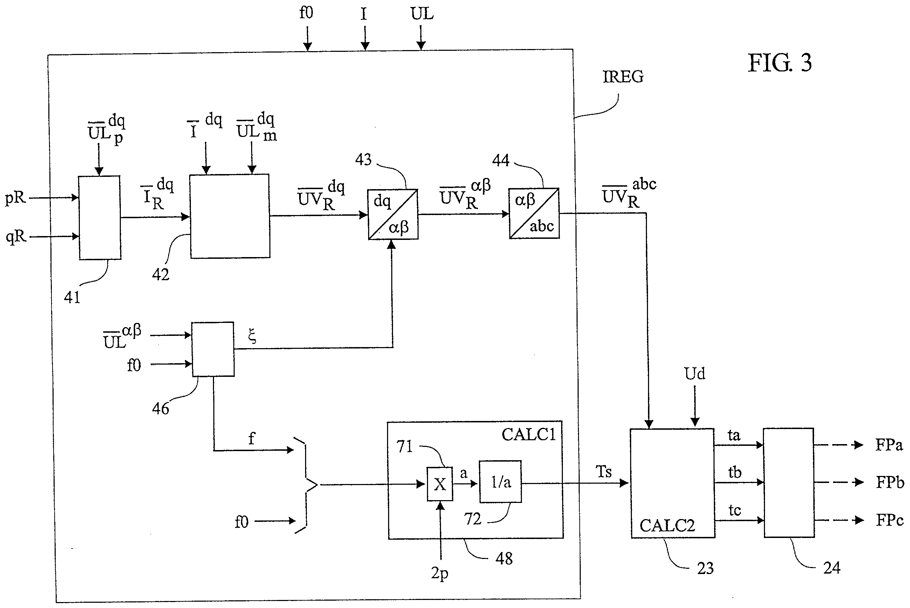

Figure 3 illustrates the basic structure of a converter current control system IREG according to prior art; see for example Anders Lindberg, pages 77-106. The current control system is implemented as a sampled control system with a sample period time *Ts.*

For the sake of simplicity, all variables are shown in vector form, but it is understood that the signal processing thereof is performed on the components of the respective vector in a way known per se. As the current control systems are similar for both pieces of control equipment, indices 1 and 2 are, for the sake of simplicity, omitted as indices on the respective variables to be described below.

The converter current control system comprises a current-order calculating unit 41, a current controller 42, transformation members 43 and 44, a first phase locked loop (PLL) member 46, and a first calculating unit 48.

The converter current control system receives signals pR and qR, generated for example as explained above with reference to figure 2. The signals *pR* and *qR* are supplied to the current-order calculating unit 41, which in dependence thereon calculates and outputs reference values for the alternating current at the converter. The reference values are expressed in the *dq* -reference plane as $I_R^d$ and $I_R^q$ respective, and in the figure shown as a current reference vector $\bar{I}_R^{dq} = I_R^d + j\,I_R^q$. The calculation is performed according to the per se known relations

$$p_R = UL^d\,I_R^d + UL^q\,I_R^q$$
$$q_R = -(UL^d\,I_R^q - UL^q\,I_R^d)$$

$$(5)$$

wherein the voltages *UL^d* and *UL^q* represent the *d* - and q -components respectively, of the bus voltage *UL,* sensed in the alternating current network, and transformed to the *dq* -reference plane in a manner known per se, for example as described in Anders Lindberg, pages 80-84.

The current reference values $I_R^d$ and $I_R^q$ may be limited in accordance with specified operating conditions for the transmission system before further processing but such limitation means, which may be implemented in per se known ways, are not treated in this context.

It is noted that in a *dq* -reference plane rotating in synchronism with the bus voltage as described above, the *q*-component of the bus voltage becomes zero. It then follows from expression (5) that the d -component of the current reference value becomes a reference value for active power and the q - component a reference value for reactive power.

The actual value I of the alternating current is sensed in the alternating current network at the converter and transformed to the *dq* -reference plane as an actual current vector $\bar{I}^{dq}$(the transformation not shown in the figure).

Current controller 42 is supplied with the current reference vector $\bar{I}_R^{dq}$, the actual current vector $\bar{I}^{dq}$, and with a mean value $\overline{UL}_m^{dq}$ of the bus voltage *UL* transformed to the *dq* -reference plane. The current controller outputs in dependence thereon an output signal designated $\overline{UV}_R^{dq}$, which is the alternating voltage reference vector for the bridge voltage of the converter in the *dq* - reference plane. For a detailed description of an embodiment of the internal structure of the current controller, reference is made to Anders Lindberg, in particular pages 1, and 77-106.

The alternating voltage reference vector $\overline{UV}_R^{dq}$ is supplied to a transformation member 43, transforming the vector to the $\alpha\beta$ -reference plane. The output of the transformation member 43 is supplied to a transformation member 44, transforming the supplied vector to the *abc* -reference plane as a vector $\overline{UV}_R^{abc}$. This vector is the bridge voltage reference vector for the converter, having as components the voltage reference templates, i.e. voltage reference values, for the respective three phases of the alternating current system.

The voltage reference vector $\overline{UV}_R^{abc}$ is supplied to pulse width modulation unit 23 as described above with reference to figure 2.

The transformation member 43 performs in a way known per se the transformation $\overline{UV}_R^{\alpha\beta} = \overline{UV}_R^{dq} * e^{j\xi}$, which follows from the expressions (2) - (4) with $\varphi = 0$ and the transformation angle $\xi = \omega t$.

A transformation angle signal, in the figure designated $\xi$, is in a conventional manner generated by the phase-locked loop (PLL) member 46, in dependence on the nominal value *f0* of the frequency of the alternating current electric power network, and of the phase position of the bus voltage *UL,* transformed to the $\alpha\beta$ -reference plane, and then supplied to the transformation member 43.

The signal $\xi$ can be conceived of as a phase reference synchronising signal, in the following shortly referred to as synchronising signal or phase angle signal. It has the purpose of synchronising the rotating *dq* -reference plane with the bus voltage *abc* - system, and represents an electrical angle linearly increasing with time with a time rate proportional to the actual frequency of the alternating current network. At least under steady state conditions the synchronising signal $\xi$ is locked to and in phase with the phase position of the bus voltage of the alternating current network. Then, also the rotating *dq*-reference plane is locked to and maintained in synchronism with the three-phase *abc* -system and in particular with the bus voltage. Under these conditions, also the q -component of the bus voltage becomes zero.

In the general case, the converter will transmit an active power, which implies that there is a phase difference $\delta$ between the bus voltage and the voltage generated by the converter. Thus, although not particularly shown in figure 3, the voltage reference vector $\overline{UV}_R^{\alpha\beta}$ will in the general case have a phase position $\xi'=\xi+\delta$, where the transformation angle $\xi=\omega t$.

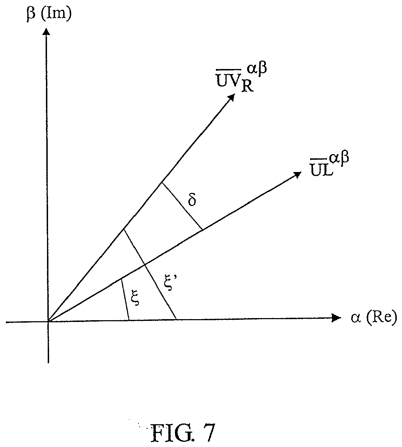

This is further illustrated in figure 7, in which the phase positions of the voltage reference vector $\overline{UV}_R^{\alpha\beta}$ and of the bus voltage vector $\overline{UL}^{\alpha\beta}$ in the $\alpha\beta$ -reference plane are shown. In this figure, the horizontal axis, labelled $\alpha$ (Re) and the vertical axis, labelled $\beta$ (Im) are the orthogonal axis of the $\alpha\beta$ -reference plane. As can be readily seen from the figure, with the phase difference $\delta$ equal to zero, i.e. with no active power transmitted by the converter, the phase positions of the two voltage vectors coincide. With active power transmitted, the voltage reference vector $\overline{UV}_R^{\alpha\beta}$ will have a phase position $\xi'$ determined by the relation $\xi'=\xi+\delta$, in which $\xi$ is the phase position of the bus voltage vector $\overline{UL}^{\alpha\beta}$.

Thus, in the general case, the phase position of the voltage reference vector $\overline{UV}_R^{\alpha\beta}$ will have a phase position $\xi'$.

As known in the prior art and indicated by the saw-tooth shapes in figure 2, pulse width modulation unit 23 in principle determines the time instants *ta, tb, tc* for the commutation of the valves in the respective phase a, b and c of the converter by comparing the amplitudes of the respective components of the voltage reference vector with carrier waves of triangular shape, i.e. a commutation is initialised at each intersection between the respective component of the voltage reference vector and the associated carrier wave.

A pulse number *p* is defined as the ratio of the frequency *fc* of the carrier wave and the fundamental frequency *f* of the voltage reference template.

Various main circuit configurations of voltage source converters, such as 2-level and 3-level bridges, as well as their principles of operation, are well known in the art, reference is made to for example Anders Lindberg, pages 8-16.

Depending on the kind of converter bridge, the carrier waves are arranged somewhat differently. Thus, for a 2-level converter, the carrier wave is symmetrical around the zero level and has peak values corresponding to + $U_d$ / 2 and -$U_d$ / 2, where $U_d$ is the DC voltage of the capacitor equipment to which the converter is coupled. For a 3-level converter, two carrier waves are used for each phase, a positive one oscillating between peak values corresponding to zero and to + $U_d$ / 2, and a negative one oscillating between peak values corresponding to - $U_d$ / 2 and zero. The two carrier waves are synchronised in such a way that their most positive peak values coincide in time, intersections between the positive carrier wave and the respective component of the voltage reference vector being used for positive values of the reference voltage, and intersections between the negative carrier wave and the reference voltage being used for negative values of the reference voltage. Reference is made to for example Anders Lindberg, figures 3.9 and 3.10 on pages 36-37.

According to the state of the art (se for example Anders Lindberg, pages 21-46), with the converter control equipment operating as a sampled control system with a sample period time *Ts,* the time instants *ta, tb,* and *tc* are, as will be described in more detail below, calculated as time delays from a sample instant in dependence on the sample period time and a so-called modulation index.

In such a case, there is no need to generate an explicit carrier wave for comparison with the voltage reference template.

However, an implicit underlying carrier wave may still be visualized, having a period time that is twice the sample period time, and with its peak values of the carrier wave, the most positive as well as the most negative ones, coinciding in time with the sample instants. The phase angle of the implicit carrier wave may then be defined such that at the peak values, the phase angle is for a 3-level converter $k*\pi$, and for a 2-level converter $k*\pi+\pi/2$, where *k* is an integer 0, 1,2,....

In this context, it is noted that the phase angle of the voltage reference templates is defined such that the zero crossings of the templates correspond to phase angles 0° and 180°.

Thus, under the assumption that the converter control equipment operates as a sampled control system, the sample period time *Ts* of the time-discrete control system becomes

$$Ts = T / 2p \tag{6}$$

wherein T=1/f is the period time of the voltage reference template,

The commutation time *tx* for a phase *a, b, c (x = a, b,* or c), being the time delay between the sample instant and the commutation instant of the respective converter valve, may be calculated as

$$tx = (1 \pm m)Ts/2 \qquad\qquad (7)$$

where the plus and the minus signs are used alternately.

The parameter m is the so-called modulation index,

$$m = 2 * UV_R^x/Ud \qquad\qquad (8)$$

The first calculating unit 48 (figure 3) is supplied with an input signal representative of a frequency, and comprises a multiplying member 71 and an inverting member 72. The multiplying member is supplied with the frequency value of the input signal and with a predetermined parameter value $2p$. The inverting member is supplied with the result of the multiplication and thus outputs a sample period time $Ts$ that is dependent on the inputted frequency value.

The pulse width modulation unit 23 (see also figure 2) is embodied as a second calculating unit 23 that is supplied with current values of the sample period time as provided by the inverting member 72, with the voltage reference vector $\overline{UV}_R^{abc}$ expressed in the *abc* -reference plane, and with the DC-voltage $Ud$ .

The calculating unit processes in a way known per se the three phase components $UV_R^a$ , $UV_R^b$ , and $UV_R^c$ of the voltage reference vector, and calculates for each phase the respective commutation time according to the relations (7) and (8) above.

In a way known per se, the switching logic unit 24 is supplied with the calculated commutation times, and generates in dependence thereon via a timer (not shown) that is reset at each sample instant, a train *FPa, FPb,* and *FPc,* of turn on/turn off orders supplied to the semiconductor valves.

Figure 3 illustrates two alternative ways, as known in the prior art, of providing an input signal to the multiplying member 71 of the calculating unit 48.

In the process of generating the synchronising signal $\xi$, the phase-locked loop member 46 also generates a value f of the actual frequency of the alternating current network. This value is supplied to the multiplying member 71, and the sample period time $Ts$ of the sampled control system is thus determined as $Ts=T/2p,$ wherein $T$ is the period time corresponding to the actual network frequency f .

Alternatively, as also is indicated in figure 3, the multiplying member 71 is supplied with the nominal value $f0$ of the frequency of the alternating current electric power network. The sample period time $Ts$ is in this alternative determined as a fixed value $Ts=T_0/2p$ wherein $T_0$ is the period time corresponding to the nominal frequency $f_0$.

With the converter coupled to an electric network having an actual fundamental frequency, the nominal value of which is usually 50 or 60 Hz, the converter is controlled to generate an AC voltage having a component of that actual fundamental frequency. However, due to the pulse width modulation system, the generated voltage will also comprise components of other frequencies, typically around the frequency of the carrier wave, as well as subharmonics and low order harmonics of the fundamental frequency.

## SUMMARY OF THE INVENTION

Studies have shown that in cases where the sample period time $Ts$ is determined as a fixed value $Ts=T_0/2p,$ the voltage generated by the converter will contain sub-harmonic components, in a 50 Hz system typically 0.5 Hz, 15 Hz etc.

Also in cases where the sample period time $Ts$ is determined as a function of the actual network frequency $f$ as described above, the voltage generated by the converter will contain low order harmonic components, such as of the 5th, 7th and the 9th order etc.

There is a general wish to reduce the switching frequency of the converter in order to reduce the switching losses. However, with a lower switching frequency, the amplitude of the generated frequency components other than of the actual fundamental frequency will increase. This will put heavier demands on the filter circuits in order to meet requirements from customers as well as standardised requirements on harmonic content of the voltage, resulting in greater costs and more space required for the filter circuits.

It is an object of the present invention to provide a time-discrete pulse-width modulation control equipment for a voltage source converter, in particular a 3-level or a 2-level converter, and a method for controlling such a converter, that reduce the content of sub-harmonic components and in particular reduce the content of low order harmonic components in the voltage generated by the converter.

From the above description of the prior art, it is observed that in the case when the sample period time $Ts$ is determined as a function of the actual network frequency $f$, there is a synchronisation in frequency between the actual network frequency and the sample period time, as expressed by the relation (6) above, equivalent to a corresponding synchronisation in frequency between the actual network frequency and an implicit carrier wave (or an explicit carrier wave in control equipment where such a carrier wave is generated).

However, there is in this prior art no synchronisation with respect to phase, i.e. by using the concept of a carrier wave for visualisation, the phase difference between a respective voltage reference template and the corresponding carrier wave is accidental. This also implies that the distance in time between the sampling instants and the phase positions 0° and 180° of the voltage reference template, i.e. the zero crossings of the voltage reference template, is accidental.

Obviously, when the sample period time is determined as a fixed value $Ts=T_0/2p,$ there is no such synchronisation, neither with respect to frequency nor with respect to phase.

The above mentioned object is according to the invention achieved by providing phase-locking means for synchronising the sample instants and the reference voltage template so that for a 3-level converter the phase positions 0° and 180° of the voltage reference template each coincide with a sample instant, and for a 2-level converter the phase positions 0° and 180° of the voltage reference template each coincide with an instant in time corresponding to a sample instant that is displaced in time with half the sample period time, said phase-locking means for generating, in dependence on the voltage reference template and on a sample period time, a frequency tracking signal tracking the reference frequency of the voltage reference template.

In an advantageous development of the invention, said phase-locking means comprises a first signal generating means for generation, in dependence on the frequency tracking signal and the sample period time, of a track angle signal for tracking the phase angle value of the voltage reference template, a phase detecting means for generating a phase difference signal in dependence on said track angle signal and the voltage reference template, representative of a phase difference between the reference phase angle of the voltage reference template and said track angle, controller means for generation of a frequency correction signal in dependence on said phase difference signal, and means for generating said frequency tracking signal in dependence on said frequency correction signal.

In another advantageous development of the invention, said phase detecting means comprises means for forming said phase difference signal via multiplications of components of the voltage reference template by sine and cosine functions of the track angle signal.

Further advantageous developments of the invention will become clear from the description of preferred embodiments of the invention and the attached claims.

The invention also relates to a computer program product, and to a computer readable medium according to the attached corresponding patent claims. Studies have shown that with control equipment according to the invention, the result will be a substantial reduction of the generated low order harmonics, typically up to 10 times as compared with prior art, as well as of subharmonics.

The invention refers to a time-discrete pulse-width modulation control equipment for a 3-level or a 2-level voltage source converter according to claim 1, a corresponding method for controlling a 3-level or a 2-level voltage source converter according to claim 5, a corresponding computer program product according to claim 9 and a corresponding computer readable medium according to claim 11. Preferred embodiments are defined in the dependent claims.

BRIEF DESCRIPTION OF THE DRAWINGS

The invention will be explained in greater detail by description of preferred embodiments with reference to the accompanying drawings, which are all schematic and in the form of single line diagrams and block diagrams respectively, and wherein

figure 1    shows in the form of a schematic single line and block diagram a high voltage direct current transmission system as known in the prior art,

figure 2    shows a known embodiment of control equipment for a voltage source converter for a transmission system according to figure 1,

figure 3    shows in more detail parts of the control equipment according to figure 2,

figure 4A    shows an embodiment of converter control equipment according to the invention, for a 3-level converter,

figure 4B    shows parts of an embodiment of converter control equipment according to the invention, for a 2-level converter,

figure 5    shows an embodiment of a phase-locking means of converter control equipment according to figures 4A and 4B,

figure 6 shows details of a phase-locking means according to figure 5, and

figure 7 shows the phase relations between a voltage reference vector and a bus voltage vector in an embodiment of control equipment according to figure 3.

DESCRIPTION OF THE PREFERRED EMBODIMENTS

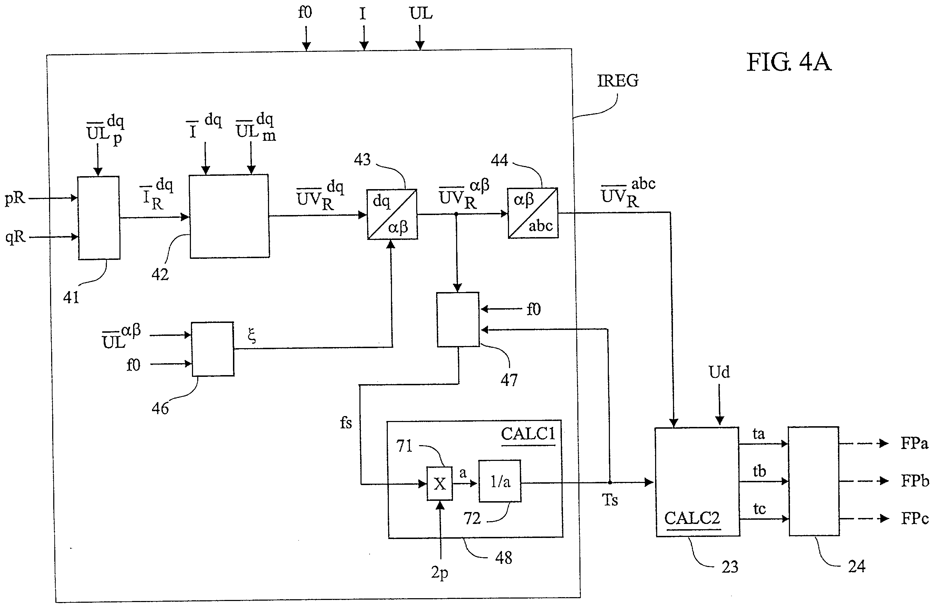

Figure 4A shows an embodiment of converter control equipment according to the invention, in particular adapted for a 3-level converter. As compared with the known embodiment of such an equipment as described with reference to figure 3, a second phase-locked loop member 47 has been added. As will be explained in further detail below, the member 47 generates and supplies to the multiplying member 71 of the first calculating unit 48 a frequency tracking signal *fs,* that is tracking the reference frequency *f* of the voltage reference template, and is representative of the frequency of the voltage reference vector $\overline{UV}_R^{\alpha\beta}$.

This frequency tracking signal *fs* is supplied to the multiplying member 71 instead of, as described above as prior art, a signal representative of the actual frequency value f of the alternating current electric power network provided by the phase locked loop member 46 (figure 3), or alternatively, the nominal value *f0* of the frequency of the alternating current electric power network.

Thus, according to the invention, the sample period time *Ts* is determined as

$$Ts = 1/(2p * fs) \tag{9}$$

In this embodiment of the invention, the phase-locked loop member 47 is supplied with the value of the alternating voltage reference vector $\overline{UV}_R^{\alpha\beta}$ expressed in the $\alpha\beta$-reference plane, a running value of the sample period time *Ts,* and the nominal value *f0* of the frequency of the alternating current electric power network.

The calculating unit 48 calculates, in the way as described above with reference to figure 3, in dependence on the frequency tracking signal *fs* the sample period time *Ts* for at least that part of the sampled control system that controls the firing instants of the converter. The respective commutation times for each phase, and the trains *FPa, FPb,* and *FPc,* of turn on/turn off orders for the semiconductor valves, are then determined in the way as described above with reference to figure 3.

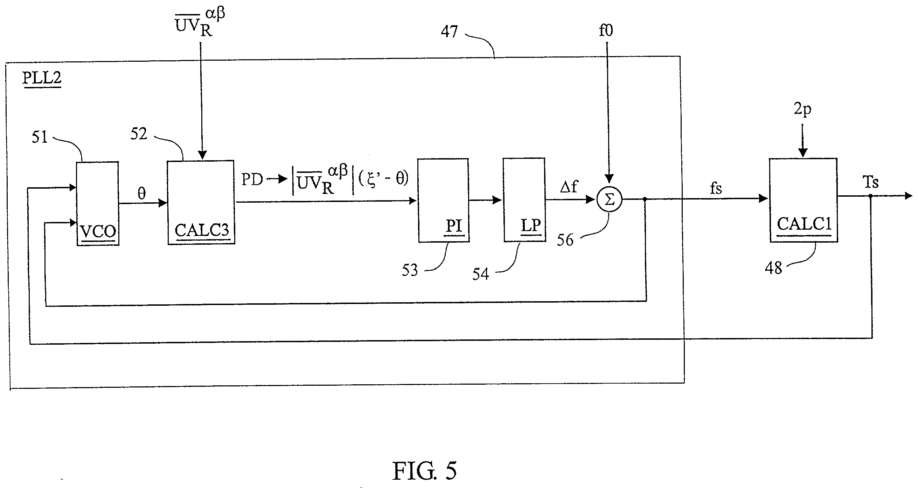

Figure 5 shows an embodiment of the phase-locked loop member 47 according to the invention. A phase-angle generating unit 51 generates in dependence on the frequency tracking signal *fs* and the sample period time *Ts* a track angle signal $\theta$, that is supplied to a third calculating unit 52. The calculating unit 52 is also supplied with the alternating voltage reference vector $\overline{UV}_R^{\alpha\beta}$. As mentioned above, the vector $\overline{UV}_R^{\alpha\beta}$ has in the general case a phase angle $\xi$, and the calculating unit 52 calculates in dependence on its inputs an output signal PD, representative of the phase difference $\xi - \theta$. The output signal PD is supplied to a controller unit 53, having proportional-integral characteristic. The output of the controller unit is supplied to a filter unit 54 having a low-pass characteristic. The output of the filter unit 54 is designated as a frequency correction signal $\Delta f$.

The nominal value *f0* of the frequency of the alternating current electric power network, and the output $\Delta f$ of the filter unit 54 are supplied to an adding member 56, which outputs the sum thereof as the frequency-tracking signal *fs.* The frequency-tracking signal is supplied to the phase-angle generating unit 51 and to the calculating unit 48.

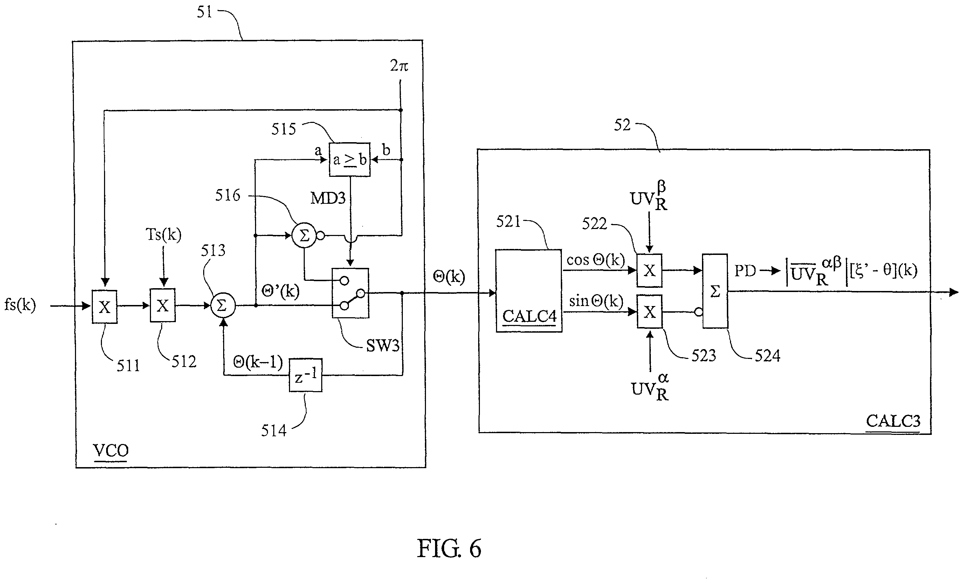

Figure 6 shows an embodiment of the phase-angle generating unit 51 and the third calculating unit 52 as described with reference to figure 5. To illustrate the time-discrete function of the sampled control system, the variables *fs, Ts,* and $\theta$ are indicated as *fs(k), Ts(k),* and $\theta(k)$, respectively. The integer *k* is replacing time as independent variable, and each step in time corresponds to the sample period time *Ts.*

A first multiplying member 511 is supplied with the running value *fs(k)* of the frequency-tracking signal and with the factor $2\pi$. The product is supplied to a second multiplying member 512, to which also the current value *Ts(k)* of the sample period time is supplied. An adding member 513 is supplied with output from the second multiplying member 512 and with the track angle signal value $\theta(k-1)$ as calculated one sample period earlier. The output of the adding member 513, designated $\theta'(k),$ is supplied to one of the inputs of a selector means SW3, the output of which is the current value $\theta(k)$ of the track angle signal $\theta$.

The value $\theta(k-1)$ of the track angle signal as calculated one sample period earlier is provided via a delay unit 514, having a transfer function $z^{-1}$ that indicates a delay with one sample period.

As is clear from above, the track angle signal $\theta$ is calculated as

$$\theta(k) = \theta(k-1) + 2\pi * fs(k) * Ts(k) \tag{10}$$

The current value $\theta'(k)$ of the track angle signal is also supplied to a comparator 515, where it is compared with the factor $2\pi$. For the case that $\theta'(k) > 2\pi$, the comparator 515 generates a selector signal MD3 that selects a signal having the value $\theta'(k) - 2\pi$ as the output value $\theta(k)$ for the track angle signal $\theta$. The signal having the value $\theta'(k) - 2\pi$ is provided by a difference-forming member 516, which is supplied with and forms the difference of the factor $2\pi$ and the output $\theta'(k)$ of the adding member 513.

Thus, $\theta(k) = \theta(k-1) + 2\pi * fs(k) * Ts(k)$ for $\theta(k) \leq 2\pi$, and $\theta(k) = 0$ for $\theta(k) > 2\pi$, describing a repetitive signal, step-wise increasing from the value zero to the value $2\pi$.

The third calculating unit 52 comprises a fourth calculating unit 521, supplied with the value $\theta(k)$ of the track angle signal $\theta$, and which unit, in a way known per se, calculates and outputs the trigonometric functions $\cos\theta(k)$ and $\sin\theta(k)$.

The calculating unit 52 further comprises multiplying members 522, 523, and a difference-forming member 524.

The vector $\overline{UV}_R^{\alpha\beta}$ has two orthogonal components, designated $UV_R^{\alpha}$ and $UV_R^{\beta}$. The component $UV_R^{\alpha}$ can be expressed as $UV_R^{\alpha} = \left|\overline{UV}_R^{\alpha\beta}\right|\cos\xi'$, and the component $UV_R^{\beta}$ as $UV_R^{\beta} = \left|\overline{UV}_R^{\alpha\beta}\right|\sin\xi'$, where $\xi$ is the phase position of voltage reference vector, and $\left|\overline{UV}_R^{\alpha\beta}\right|$ is the absolute value of that vector. These orthogonal components are actually available in the converter current control system.

The component $UV_R^{\beta}$ and the value of the trigonometric function $\cos\theta(k)$ are supplied to the multiplying member 522, and the component $UV_R^{\alpha}$ and the value of the trigonometric function $\sin\theta(k)$ are supplied to the multiplying member 523.

The difference-forming member 524 is supplied with the outputs of the members 522 and 523, and forms as output the phase difference signal PD as the difference of the outputs of the multiplying member 522 and the multiplying member 523.

From the above and from the trigonometric expression for sinus of a difference of two angles, it is clear that the output of the difference-forming member 524 includes a factor $\sin(\xi - \theta)$. When the value of $\theta$ approaches the value of $\xi$, the sine function can with increasing accuracy be replaced by the angle itself, and the phase difference signal PD approaches a value as given by the following expression

$$PD \rightarrow \left|\overline{UV}_R^{\alpha\beta}\right| * [\xi'-\theta](k) \tag{11}$$

which value is also indicated in figures 5 and 6.

From the feedback and integrating structure of the subsystem made up of the phase-locked loop member 47 and the calculating unit 48 as described with reference to figures 5 and 6, it is clear that this subsystem will tend to settle at a state where the difference $(\xi - \theta)$ is zero.

The track angle signal $\theta$ can be interpreted as a signal that tracks the phase position of the voltage reference and which, in steady state, is equal to and representative of the phase position of the voltage reference.

Also, as described above, the frequency-tracking signal $fs$ is determined as $fs = \Delta f + f0$, which implies that at least in steady state, the frequency-tracking signal $fs$ represents a frequency that is equal to and representative of the frequency of the components of the voltage reference vector $\overline{UV}_R^{\alpha\beta}$, i.e. of the voltage reference templates.

As described above, the sample period time value $Ts$ outputted from the calculating unit 48 will be $Ts = 1/(2p*fs)$, and the condition that in steady state the difference $(\xi - \theta)$ is zero implies that sample instants $k * Ts$ will coincide in time with zero crossings of the voltage reference templates, i.e. where the phase positions of the voltage reference templates are 0° and 180°.

Further, with the pulse number predetermined to be an even number $2p$, there will be exactly $2p$ sample instants during a full period of the voltage reference. Thus, as is understood from the above description, each sample instant will take place at time instants corresponding to angles

$$\theta(k) = k * \frac{2\pi}{2p} \qquad\qquad (12)$$

where k is a natural number 1,2,3 ....

By putting $k = m * p$, where *m* is a natural number 1,2,3 ..., the relation (12) will read

$$\theta(k) = m * \pi \qquad\qquad (12a)$$

As mentioned above, due to the feedback and integrating structure of the subsystem made up of the phase-locked loop member 47 and the calculating unit 48, this subsystem will tend to settle at a state where the difference ($\xi$-$\theta$) is zero, which together with the relation (12a) implies that there will be a sample instant occurring exactly at the phase positions 0° and 180° of the voltage reference templates.

In particular, as there is a whole number of samples over half a period of the voltage reference, one sample, i.e. for $k = p$, will occur at the angle $\theta(k)=\pi$. Thus, with the condition ($\xi$-$\theta$) being zero, also the voltage reference templates will at this sample instant have the phase angle $\xi(k) =\pi$.

Thus, according to the described invention, the sample instants are synchronised to the reference voltage not only with respect to frequency but also with respect to phase angle in such a way that for a 3-level converter the phase positions 0° and 180° of the voltage reference template each coincide with a sample instant. This is equivalent to that the phase difference between the voltage reference templates and their corresponding carrier waves, implicit or explicit, is 0° or 180°.

The above-described embodiment of the invention in particular refers to a 3-level converter bridge. However, the invention is also applicable to for example a 2-level converter. The description of the phase locking means and in particular the expressions (9) - (12) above are still valid, assuming that the phase position of the voltage reference template in the $\alpha\beta$-reference plane, when inputted to the phase-locked loop member 47, is displaced an angle that in time corresponds to half of the sample period time. Then, the sample instants will for the 2-level converter be synchronised to the voltage reference templates not only with respect to frequency but also with respect to phase angle, however, in such a way that the phase positions 0° and 180° of the voltage reference templates each coincide with an instant in time corresponding to a sample instant that is displaced in time with half the sample period time *(Ts)*.

This is equivalent to that the phase difference between the voltage reference templates and their corresponding carrier waves, implicit or explicit, is 0° or 180°.

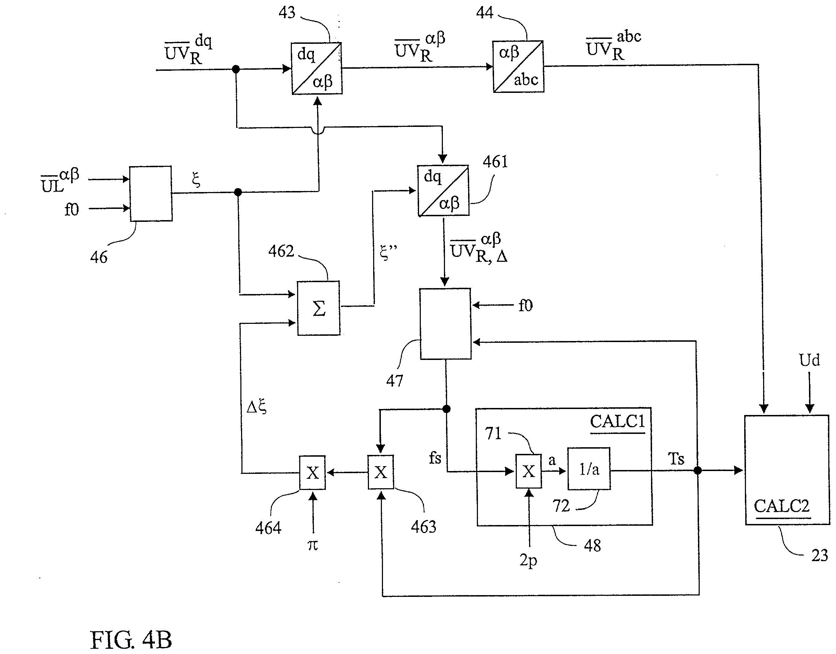

This embodiment of the invention is illustrated in figure 4B, showing parts of the converter control equipment as described with reference to figure 4A. The voltage reference vector $\overline{UV}_{R}^{dq}$ is supplied to a transformation member 461, transforming the vector to the $\alpha\beta$-reference plane in dependence on a synchronising signal $\xi''$. The signal $\xi''$ is formed in a summing member 462 as the sum of the synchronising signal $\xi$, formed by the member 46, and of a phase shift $\Delta\xi$. The sample period time *Ts* and the frequency-tracking signal *fs* are supplied to a multiplying member 463. The output of the multiplying member 463 is supplied to a multiplying member 464, where it is multiplied by the factor $\pi$ to form the phase shift $\Delta\xi$ as $\Delta\xi=2\pi * fs * Ts/2$. The output of the transformation member 461, labelled $\overline{UV}_{R,\Delta}^{\alpha\beta}$, which thus has the phase displacement $\Delta\xi$ with respect to the voltage reference vector $\overline{UV}_{R}^{\alpha\beta}$ as supplied to the transformation member 44, is supplied to the phase-locked loop member 47.

Using the concept of a carrier wave for a visualisation of the invention, the carrier wave signal will, according to the invention, not only have a frequency equal to p times the frequency of the voltage reference templates but also be locked in phase to the phase position of the voltage reference templates in the following way.

For a 3-level converter, the phase difference between the voltage reference templates and their corresponding carrier waves will in the steady state be equal to $m * \pi$, where *m* is a natural number 1, 2, 3 ..., implying that that there is a synchronisation with respect to frequency as well as with respect to phase position between the carrier wave and the voltage reference template. The phase positions 0° and 180° of the voltage reference template will then each coincide with a sample instant.

Also for a 2-level converter, the phase difference between the voltage reference templates and their corresponding carrier waves will in the steady state be equal to $m * \pi$, implying that there is a synchronisation with respect to frequency as well as with respect to phase position between the carrier wave and the voltage reference template. However, in this case the phase positions 0° and 180° of the voltage reference template will each coincide with an instant in time corresponding to a sample instant that is displaced in time with half the sample period time, i.e. they coincide with an instant in time that is at the positioned midway between two sample instants.

**Claims**

1. A time-discrete pulse-width modulation control equipment (CTRL1, CTRL2) for a 3-level or a 2-level voltage source converter, the control equipment having means (IREG) being configured to generate an AC-voltage reference template $(UV_R^a, UV_R^b, UV_R^c, \overline{UV}_R^{abc}, \overline{UV}_R^{\alpha\beta})$ for a voltage (UV) to be generated by the converter, the voltage reference template having a variable reference frequency (f) and a reference phase angle ($\xi$), and being sampled at consecutive sample instants (k*Ts) that are separated in time by a variable sample period time *(Ts),* the control equipment further having first means (48) being configured to determine the sample period time in dependence on an input signal representative of a frequency, and second means (23) being configured to determine commutation time instants (ta, tb, tc) of the converter in dependence on sampled values of the voltage reference template, a modulation index (m), and the sample period time, **characterised in that** the control equipment further comprises phase-locking means (47) being configured to synchronise the sample instants and the reference voltage template so that
for the 3-level voltage source converter the phase positions 0° and 180° of the reference voltage template each coincide with a sample instant, and
for the 2-level voltage source converter the phase positions 0° and 180° of the reference voltage template each coincide with an instant in time corresponding to a sample instant that is displaced in time with half the sample period time *(Ts),*
said phase-locking means (47) being configured to generate, in dependence on the voltage reference template and on a sample period time determined by the first means (48), a frequency tracking signal (fs) tracking the reference frequency (f) of the voltage reference template and supplied to the first means.

2. A control equipment according to claim 1, **characterised in that** the first means (48) being configured to determine the sample period time comprises means (71) being configured to form a product by multiplying the frequency tracking signal by twice a pulse number (p), said pulse number being an integer, and means (72) being configured to invert said product, and to output the inverted product as the sample period time.

3. A control equipment according to claim 2, **characterised in that** said phase-locking means comprises a first signal generating means (51) being configured to generate, in dependence on the frequency tracking signal *(fs)* and the sample period time, a track angle signal ($\theta$) for tracking the phase angle value of the voltage reference template, a phase detecting means (52) being configured to generate a phase difference signal (PD) in dependence on said track angle signal and the voltage reference template, representative of a phase difference between the reference phase angle ($\xi$) of the voltage reference template and said track angle, controller means (53,54) being configured to generate a frequency correction signal ($\Delta f$) in dependence on said phase difference signal, and means (56) being configured to generate said frequency tracking signal (fs) in dependence on said frequency correction signal.

4. A control equipment according to claim 3, wherein the voltage reference template has the form of a vector $(\overline{UV}_R^{\alpha\beta})$ in a stationary reference frame **characterised in that** said phase detecting means (52) comprises means (521 - 524) being configured to form said phase difference signal via multiplications of components of the voltage reference template by sine and cosine functions of the track angle signal.

5. A method for controlling a 3-level or a 2-level voltage source converter, having a time-discrete pulse-width modulation control equipment (CTRL1, CTRL2) the control equipment having means (IREG) for generation of an AC-voltage reference template $(UV_R^a, UV_R^b, UV_R^c, \overline{UV}_R^{abc}, \overline{UV}_R^{\alpha\beta})$ for a voltage (UV) to be generated by the converter, the AC voltage reference template having a variable reference frequency (f) and a reference phase angle ($\xi$), and being sampled at consecutive sample instants (k*Ts) that are separated in time by a variable sample period time *(Ts),* the control equipment having first means (48) for determination of the sample period time in dependence on an input signal representative of a frequency, and second means (23) for determination of commutation time instants (ta, tb, tc) of the converter in dependence on sampled values of the voltage reference template, a modulation index (m), and the sample period time, **characterised in that** the sample instants and the reference voltage template are synchronised in time so that
for the 3-level voltage source converter the phase positions 0° and 180° of the reference voltage template each coincide with a sample instant, and

for the 2-level voltage source converter the phase positions 0° and 180° of the reference voltage template each coincide with an instant in time corresponding to a sample instant that is displaced in time with half the sample period time (Ts), by

generating, in dependence on the voltage reference template and on a sample period time determined by the first means (48), a frequency tracking signal *(fs)* tracking the reference frequency *(f)* of the voltage reference template, and supplying said frequency-tracking signal to the first means.

6. A method according to claim 5, **characterised in that** the sample period time is formed as a product by multiplying the frequency tracking signal by twice a pulse number (*p*), said pulse number being an integer, and inverting said product, and outputting the inverted product as the sample period time.

7. A method according to claim 6, **characterised in that**
a track angle signal ($\theta$) for tracking the phase angle value of the voltage reference template is generated in dependence on the frequency-tracking signal *(fs)* and the sample period time,
a phase difference signal (PD) representative of a phase difference between the reference phase angle ($\xi$) of the voltage reference template and said track angle is generated in dependence on said track angle signal and the voltage reference template,
a frequency correction signal ($\Delta f$) is generated in dependence on said phase difference signal, and
said frequency tracking signal *(fs)* is generated in dependence on said frequency correction signal.

8. A method according to claim 7, wherein the voltage reference template has the form a vector $\left(\overline{UV}_R^{\alpha\beta}\right)$ in a stationary reference frame, **characterised in that** said phase difference signal is formed via multiplications of components of the voltage reference template by sine and cosine functions of the track angle signal.

9. A computer program product comprising instructions to cause the time-discrete pulse-width modulation control equipment (CTRL1, CTRL2), as defined in claim 1, to execute the steps of the method of any of the claims 5 to 8.

10. A computer program product according to claim 9, supplied at least to a part over a network such as for example the Internet.

11. A computer readable medium having stored thereon the computer program of claim 9.

## Patentansprüche

1. Steuervorrichtung für eine zeitdiskrete Pulsbreitenmodulation (CTRL1, CTRL2) für einen 3-stufigen oder einen 2-stufigen Spannungsquellenumrichter, wobei die Steuervorrichtung ein Element (IREG) aufweist, das konfiguriert ist zum Erzeugen einer Wechselspannungsreferenzvorlage $\left(UV_R^a,\ UV_R^b,\ UV_R^c,\ \overline{UV}_R^{abc},\ \overline{UV}_R^{\alpha\beta}\right)$ für eine von dem Umrichter zu erzeugende Spannung ($\overline{UV}$), wobei die Spannungsreferenzvorlage eine variable Referenzfrequenz (f) und einen Referenzphasenwinkel ($\xi$') aufweist und an aufeinanderfolgenden Abtastzeitpunkten (k*Ts) abgetastet wird, die in der Zeit durch eine variable Abtastperiodendauer (Ts) getrennt sind, wobei die Steuervorrichtung außerdem ein erstes Element (48) aufweist, das konfiguriert ist zum Ermitteln der Abtastperiodendauer in Abhängigkeit von einem Eingangssignal, das repräsentativ für eine Frequenz ist, und von einem zweiten Element (23), das konfiguriert ist zum Ermitteln von Umpolungszeitpunkten (ta, tb, tc) des Umrichters in Abhängigkeit von den Abtastwerten der Spannungsreferenzvorlage, von einem Modulationsindex (m) und von der Abtastperiodendauer, **dadurch gekennzeichnet, dass** die Steuervorrichtung außerdem ein erstes Phasensperrelement (47) aufweist, das konfiguriert ist zum Synchronisieren der Abtastzeitpunkte und der Referenzspannungsvorlage, sodass die Phasenlagen 0° und 180° der Referenzspannungsvorlage für den 3-stufigen Spannungsquellenumrichter jeweils mit einem Abtastzeitpunkt übereinstimmen und die Phasenlagen 0° und 180° der Referenzspannungsvorlage für den 2-stufigen Spannungsquellenumrichter jeweils mit einem Zeitpunkt übereinstimmen, der einem Abtastzeitpunkt entspricht, der in der Zeit um die halbe Abtastperiodendauer (Ts) verschoben wird, wobei das Phasensperrelement (47) konfiguriert ist zum Erzeugen in Abhängigkeit von der Spannungsreferenzvorlage und von einer Abtastperiodendauer, die von dem ersten Element (48) ermittelt wird, eines Frequenzverfolgungssignals (fs), das die Referenzfrequenz (f) der Spannungsreferenzvorlage verfolgt und das dem ersten Element bereitgestellt wird.

2. Steuervorrichtung nach Anspruch 1, **dadurch gekennzeichnet, dass** das erste Element (48), das konfiguriert ist zum Ermitteln der Abtastperiodendauer, ein Element (71) umfasst, das konfiguriert ist zum Bilden eines Produkts, indem das Frequenzverfolgungssignal mit dem zweifachen einer Pulsanzahl (p) multipliziert wird, wobei die Pulsanzahl eine ganze Zahl ist und wobei das Element (72) konfiguriert ist zum Invertieren des Produkts und zum Ausgeben des invertierten Produkts als die Abtastperiodendauer.

3. Steuervorrichtung nach Anspruch 2, **dadurch gekennzeichnet, dass** das Phasensperrelement umfasst: ein erstes Signalerzeugungselement (51), das konfiguriert ist zum Erzeugen in Abhängigkeit von dem Frequenzverfolgungssignal (fs) und von der Abtastperiodendauer, eines Winkelverfolgungssignals ($\theta$) zum Verfolgen des Phasenwinkelwerts der Spannungsreferenzvorlage; ein Phasenerkennungselement (52), das konfiguriert ist zum Erzeugen, in Abhängigkeit von dem Winkelverfolgungssignal und von der Spannungsreferenzvorlage, eines Phasendifferenzsignals (PD), das repräsentativ für eine Phasendifferenz zwischen dem Referenzphasenwinkel ($\xi$') der Spannungsreferenzvorlage und dem Verfolgungswinkel ist; einem Steuerelement (53, 54), das konfiguriert ist zum Erzeugen eines Frequenzkorrektursignals ($\Delta f$) in Abhängigkeit von dem Phasendifferenzsignal; und ein Element (56), das konfiguriert ist zum Erzeugen des Frequenzverfolgungssignals (fs) in Abhängigkeit von dem Frequenzkorrektursignal.

4. Steuervorrichtung nach Anspruch 3, wobei die Spannungsreferenzvorlage die Form eines Vektors $(\overline{\overline{UV}}_R^{\alpha\beta})$ in einem stationären Referenzrahmen aufweist, **dadurch gekennzeichnet, dass** das Phasenerkennungselement (52) Elemente (521 bis 524) umfasst, die konfiguriert sind zum Bilden des Phasendifferenzsignals mithilfe von Multiplikationen von Komponenten der Spannungsreferenzvorlage mit Sinus- und Cosinusfunktionen des Winkelverfolgungssignals.

5. Verfahren zum Steuern eines 3-stufigen oder eines 2-stufigen Spannungsquellenumrichters, der eine Steuervorrichtung für eine zeitdiskrete Pulsbreitenmodulation (CTRL1, CTRL2) aufweist, wobei die Steuervorrichtung ein Element (IREG) zum Erzeugen einer Wechselspannungsreferenzvorlage $(UV_R^a,\quad UV_R^b,\quad UV_R^c,\quad \overline{\overline{UV}}_R^{abc},\quad \overline{\overline{UV}}_R^{\alpha\beta})$ für eine von dem Umrichter zu erzeugende Spannung $(\overline{UV})$ aufweist, wobei die Wechselspannungsreferenzvorlage eine variable Referenzfrequenz (f) und einen Referenzphasenwinkel ($\xi$') aufweist und an aufeinanderfolgenden Abtastzeitpunkten (k*Ts) abgetastet wird, die in der Zeit durch eine variable Abtastperiodendauer (Ts) getrennt sind, wobei die Steuervorrichtung aufweist: ein erstes Element (48) zum Ermitteln der Abtastperiodendauer in Abhängigkeit von einem Eingangssignal, das repräsentativ für eine Frequenz ist, und ein zweites Element (23) zum Ermitteln von Umpolungszeitpunkten (ta, tb, tc) des Umrichters in Abhängigkeit von den Abtastwerten der Spannungsreferenzvorlage, von einem Modulationsindex (m) und von der Abtastperiodendauer, **dadurch gekennzeichnet, dass** die Abtastzeitpunkte und die Referenzspannungsvorlage zeitabhängig synchronisiert werden, sodass die Phasenlagen 0° und 180° der Referenzspannungsvorlage für den 3-stufigen Spannungsquellenumrichter jeweils mit einem Abtastzeitpunkt übereinstimmen und die Phasenlagen 0° und 180° der Referenzspannungsvorlage für den 2-stufigen Spannungsquellenumrichter jeweils mit einem Zeitpunkt übereinstimmen, der einem Abtastzeitpunkt entspricht, der in der Zeit um die halbe Abtastperiodendauer (Ts) verschoben wird, indem in Abhängigkeit von der Spannungsreferenzvorlage und von einer Abtastperiodendauer, die von dem ersten Element (48) ermittelt wird, ein Frequenzverfolgungssignal (fs) erzeugt wird, das die Referenzfrequenz (f) der Spannungsreferenzvorlage verfolgt, und
indem das Frequenzverfolgungssignal dem ersten Element bereitgestellt wird.

6. Verfahren nach Anspruch 5, **dadurch gekennzeichnet, dass** die Abtastperiodendauer als ein Produkt gebildet wird, indem das Frequenzverfolgungssignal mit dem zweifachen einer Pulsanzahl (p) multipliziert wird, wobei die Pulsanzahl eine ganze Zahl ist und indem das Produkt invertiert wird und indem das invertierte Produkt als die Abtastperiodendauer ausgegeben wird.

7. Verfahren nach Anspruch 6, **dadurch gekennzeichnet, dass**
ein Winkelverfolgungssignal ($\theta$) zum Verfolgen des Phasenwinkelwerts der Spannungsreferenzvorlage in Abhängigkeit von dem Frequenzverfolgungssignal (fs) und der Abtastperiodendauer erzeugt wird,
ein Phasendifferenzsignal (PD), das repräsentativ für eine Phasendifferenz zwischen dem Referenzphasenwinkel ($\xi$') der Spannungsreferenzvorlage und dem Verfolgungswinkel ist, in Abhängigkeit von dem Winkelverfolgungssignal und der Spannungsreferenzvorlage erzeugt wird,
ein Frequenzkorrektursignal ($\Delta f$) in Abhängigkeit von dem Phasendifferenzsignal erzeugt wird, und
das Frequenzverfolgungssignal (fs) in Abhängigkeit von dem Frequenzkorrektursignal erzeugt wird.

**8.**

Verfahren nach Anspruch 7, wobei die Spannungsreferenzvorlage die Form eines Vektors $(\overline{U}\overline{V}_R^{\alpha\beta})$ in einem stationären Referenzrahmen aufweist, **dadurch gekennzeichnet, dass** das Phasendifferenzsignal mithilfe von Multiplikationen von Komponenten der Spannungsreferenzvorlage mit Sinus- und Cosinusfunktionen des Winkelverfolgungssignals gebildet wird.

**9.** Computerprogrammprodukt, das Befehle umfasst, um die Steuervorrichtung für eine zeitdiskrete Pulsbreitenmodulation (CTRL1, CTRL2) nach Anspruch 1 zu veranlassen, die Schritte des Verfahrens nach einem der Ansprüche 5 bis 8 auszuführen.

**10.** Computerprogrammprodukt nach Anspruch 9. das mindestens teilweise über ein Netzwerk wie zum Beispiel das Internet bereitgestellt wird.

**11.** Computerlesbares Medium, in dem das Computerprogramm nach Anspruch 9 gespeichert ist.


**Revendications**

**1.** Équipement de commande de modulation à largeur d'impulsion en temps discrète (CTRL1, CTRL2) destiné à un convertisseur de source de tension de niveau 2 ou de niveau 3, l'équipement de commande ayant un moyen (IREG) qui est configuré pour générer un modèle de référence de tension CA $(UV_R^a,\ UV_R^b,\ UV_R^c,\ \overline{U}\overline{V}_R^{abc},\ \overline{U}\overline{V}_R^{\alpha\beta})$ pour une tension $(\overline{UV})$ à générer par le convertisseur, le modèle de référence de tension ayant une fréquence de référence variable (f) et un angle de phase de référence ($\xi$), et étant échantillonné à des instants d'échantillons consécutifs (k*Ts) qui sont séparés dans le temps par un temps de période d'échantillon variable (Ts), l'équipement de commande ayant outre un premier moyen (48) qui est configuré pour déterminer le temps de la période d'échantillon en fonction d'un signal d'entrée représentatif d'une fréquence, et un second moyen (23) qui est configuré pour déterminer des instants de temps de commutation (ta, tb, tc) du convertisseur en fonction des valeurs échantillonnées du modèle de référence de tension, d'un index de modulation (m) et du temps de la période d'échantillon, **caractérisé en ce que** l'équipement de commande comprend en outre un moyen de verrouillage de phase (47) qui est configuré pour synchroniser les instants d'échantillons et le modèle de tension de référence de sorte que
pour le convertisseur de tension de niveau 3, les positions de phase de 0° et 180° du modèle de tension de référence coïncident chacune avec un instant d'échantillon, et
pour le convertisseur de source de tension de niveau 2, les positions de phase de 0° et 180° du modèle de tension de référence coïncident chacune avec un instant dans le temps correspondant à un instant d'échantillon qui est déplacé dans le temps de la moitié du temps de la période d'échantillon (Ts),
ledit moyen de verrouillage de phase (47) étant configuré pour générer, en fonction du modèle de référence de tension et sur un temps de la période d'échantillon déterminée par le premier moyen (48), un signal de suivi de fréquence (fs) suivant la fréquence de référence (f) du modèle de référence de tension et fourni au premier moyen.

**2.** Équipement de commande selon la revendication 1, **caractérisé en ce que** le premier moyen (48) qui est configuré pour déterminer le temps de la période d'échantillon comprend un moyen (71) qui est configuré pour former un produit en multipliant le signal de suivi de fréquence par deux fois un nombre d'impulsions (p), ledit nombre d'impulsions étant un nombre entier, et un moyen (72) qui est configuré pour inverser ledit produit, et pour délivrer en sortie le produit inversé sous la forme du temps de la période d'échantillon.

**3.** Équipement de commande selon la revendication 2, **caractérisé en ce que** ledit moyen de verrouillage de phase comprend un premier moyen de génération de signal (51) qui est configuré pour générer, en fonction du signal de suivi de fréquence (fs) et du temps de la période d'échantillon, un signal d'angle de piste ($\theta$) pour suivre la valeur d'angle de phase du modèle de référence de tension, un moyen de détection de phase (52) qui est configuré pour générer un signal de différence de phase (PD) en fonction dudit signal d'angle de piste et du modèle de référence de tension, représentant une différence de phase entre l'angle de phase de référence ($\xi$) du modèle de référence de tension et ledit angle de piste, un moyen de commande (53, 54) qui est configuré pour générer un signal de correction de fréquence ($\Delta$f) en fonction dudit signal de différence de phase, et un moyen (56) qui est configuré pour générer ledit signal de suivi de fréquence (fs) en fonction dudit signal de correction de fréquence.

**4.** Équipement de commande selon la revendication 3, dans lequel le modèle de référence de tension présente la forme d'un vecteur $(\overline{U}\overline{V}_R^{\alpha\beta})$ dans une trame de référence stationnaire

**caractérisé en ce que** ledit moyen de détection de phase (52) comprend un moyen (521-524) qui est configuré pour former ledit signal de différence de phase par le biais de multiplications de composants du modèle de référence de tension par des fonctions sinus et cosinus du signal d'angle de piste.

5. Procédé de commande d'un convertisseur de source de tension de niveau 2 ou de niveau 3, ayant un équipement de commande de modulation à largeur d'impulsion en temps discrète (CTRL1, CTRL2), l'équipement de commande ayant un moyen (IREG) permettant la génération d'un modèle de référence de tension CA $(UV_R^a, UV_R^b, UV_R^c, \overline{U}\overline{V}_R^{abc}, \overline{U}\overline{V}_R^{\alpha\beta})$ pour une tension $(\overline{UV})$ à générer par le convertisseur, le modèle de référence de tension CA ayant une fréquence de référence variable (f) et un angle de phase de référence $(\xi)$, et étant échantillonné à des instants d'échantillons consécutifs (k*Ts) qui sont séparés dans le temps par un temps de la période d'échantillon variable (Ts), l'équipement de commande ayant un premier moyen (48) pour la détermination du temps de la période d'échantillon en fonction d'un signal d'entrée représentatif d'une fréquence, et un second moyen (23) pour la détermination des instants de temps de commutation (ta, tb, tc) du convertisseur en fonction des valeurs échantillonnées du modèle de référence de tension, d'un index de modulation (m) et du temps de la période d'échantillon, **caractérisé en ce que** les instants d'échantillons et le modèle de tension de référence sont synchronisés dans le temps de sorte que

pour le convertisseur de source de tension de niveau 3, les positions de phase de 0° et 180° du modèle de tension de référence coïncident chacune avec un instant d'échantillon, et

pour le convertisseur de source de tension de niveau 2, les positions de phase de 0° et 180° du modèle de tension de référence coïncident chacune avec un instant dans le temps correspondant à un instant d'échantillon qui est déplacé dans le temps de la moitié du temps de la période d'échantillon (Ts), par

la génération, en fonction du modèle de référence de tension et sur un temps de la période d'échantillon déterminée par le premier moyen (48), d'un signal de suivi de fréquence (fs) suivant la fréquence de référence (f) du modèle de référence de tension, et

la fourniture dudit signal de suivi de fréquence au premier moyen.

6. Procédé selon la revendication 5, **caractérisé en ce que** le temps de la période d'échantillon est formé sous la forme d'un produit en multipliant le signal de suivi de fréquence par deux fois un nombre d'impulsions (p), ledit nombre d'impulsions étant un nombre entier, et inverser ledit produit, et délivrer en sortie le produit inversé sous la forme du temps de la période d'échantillon.

7. Procédé selon la revendication 6, **caractérisé en ce que**
un signal d'angle de piste $(\theta)$ permettant de suivre la valeur d'angle de phase du modèle de référence de tension est généré en fonction du signal de suivi de fréquence (fs) et du temps de la période d'échantillon,
un signal de différence de phase (PD) représentatif d'une différence de phase entre l'angle de phase de référence $(\xi)$ du modèle de référence de tension et ledit angle de piste est généré en fonction dudit signal d'angle de piste et du modèle de référence de tension,
un signal de correction de fréquence $(\Delta f)$ est généré en fonction dudit signal de différence de phase, et
ledit signal de suivi de fréquence (fs) est généré en fonction dudit signal de correction de fréquence.

8. Procédé selon la revendication 7, dans lequel le modèle de référence de tension présente la forme d'un vecteur $(\overline{U}\overline{V}_R^{\alpha\beta})$ dans une trame de référence stationnaire, **caractérisé en ce que** ledit signal de différence de phase est formé par le biais de multiplications de composants du modèle de référence de tension par des fonctions sinus et cosinus du signal d'angle de piste.

9. Produit de programme informatique comprenant des instructions permettant d'amener un équipement de commande de modulation à largeur d'impulsion en temps discrète (CTRL1, CTRL2), tel que défini dans la revendication 1, à exécuter les étapes du procédé selon l'une quelconque des revendications 5 à 8.

10. Produit de programme informatique selon la revendication 9, fourni au moins à une partie sur un réseau tel que, par exemple, l'Internet.

11. Support lisible par ordinateur sur lequel est stocké le programme informatique selon la revendication 9.

FIG. 1

FIG. 2

# FIG. 3

EP 1 369 984 B1

FIG. 4A

FIG. 4B

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1174993 A1

- US 5648894 A

**Non-patent literature cited in the description**

- **ANDERS LINDBERG.** PWM and Control of Two and Three Level High Power Voltage Source Converters. *Royal Institute of Technology, Department of Electric Power Engineering,* 1995, vol. 1 (21-56), 77-106